(19) Europäisches Patentamt
European Patent Office
Office européen des brevets

(11) **EP 3 145 780 B1**

(12) **EUROPEAN PATENT SPECIFICATION**

(45) Date of publication and mention
of the grant of the patent:
**24.11.2021 Bulletin 2021/47**

(21) Application number: **15795956.0**

(22) Date of filing: **20.05.2015**

(51) Int Cl.:
*B60W 30/14* (2006.01)   *B60K 31/00* (2006.01)
*B60T 8/1755* (2006.01)   *B60W 40/072* (2012.01)
*B60W 40/109* (2012.01)   *B60W 50/00* (2006.01)
*B60W 30/18* (2012.01)

(86) International application number:
**PCT/SE2015/050570**

(87) International publication number:
**WO 2015/178840 (26.11.2015 Gazette 2015/47)**

(54) **METHOD AND SYSTEM FOR THE ADAPTATION OF THE DRIVING OF A VEHICLE ON A ROADWAY IN ASSOCIATION WITH TAKING A CURVE**

VERFAHREN UND SYSTEM ZUR ANPASSUNG DES FAHRENS EINES FAHRZEUGS AUF EINER STRASSE IM ZUSAMMENHANG MIT EINER KURVENFAHRT

PROCÉDÉ ET SYSTÈME D'ADAPTATION DE LA CONDUITE D'UN VÉHICULE SUR UNE CHAUSSÉE EN ASSOCIATION AVEC LA PRISE D'UN VIRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2014 SE 1450597**

(43) Date of publication of application:
**29.03.2017 Bulletin 2017/13**

(73) Proprietor: **Scania CV AB**
**151 87 Södertälje (SE)**

(72) Inventors:
• **ANDERSSON, Jonny**
**S-151 68 Södertälje (SE)**

• **BREDBERG, Linus**
**S-146 34 Tullinge (SE)**

(74) Representative: **Scania CV AB**
**Patents, GP 117kv**
**151 87 Södertälje (SE)**

(56) References cited:
EP-A1- 0 901 929    EP-A1- 2 537 727
EP-A1- 2 537 727    EP-A2- 2 426 034
US-A1- 2008 059 037    US-A1- 2010 023 232
US-A1- 2011 010 068    US-A1- 2012 277 965

**Description**

TECHNICAL AREA

The invention relates to a method for the adaptation of the driving of a vehicle on a roadway in association with taking a curve according to the introduction to claim 1. The invention relates to a system for the adaptation of the driving of a vehicle on a roadway in association with taking a curve. The invention relates also to a motor vehicle. The invention relates also to a computer program and a computer program product.

BACKGROUND

During the driving of a heavy vehicle on a curvy and winding roadway it is necessary that the driver be attentive to the geometry of the road and adapts the speed in order to drive the vehicle in a safe manner. It may be difficult, due to the curvature of the roadway, for the driver to predict curves ahead and to take measures well in advance, for the safe driving of the vehicle. This can lead to the driver being compelled to brake more or less suddenly before a curve, which leads to uneconomical, and in certain cases also less safe, driving of the vehicle.

By determining the geometry of the road, which can be achieved according to one variant by means of a positional system that includes the position of the vehicle and map data with information about the geometry of the road along the route of the vehicle, it would be possible for the driver to receive information about coming curves and in this way to adapt the speed at an appropriate time before the curve, for a more economic and safer driving of the vehicle.

One problem with such a positional system is to determine the speed at which one should drive in a curve.

US2010023232, US20130289874 and DE102011080761 reveal methods to calculate the maximum speed around a curve with the aid of values for the lateral acceleration and the degree of curvature of the road.

EP2537727 A1 reveals a method to estimate a speed profile for a vehicle based on a maximum permitted lateral acceleration for a coming section of road. During the calculation of the maximum permitted lateral acceleration parameters that relate to road friction, such as the type of the road surface, the air humidity and the outdoor temperature, are taken into consideration. Also the type of vehicle, distribution of load and position of the centre of gravity are taken into consideration.

PURPOSE OF THE INVENTION

One purpose of the present invention is to achieve a method and a system for the adaptation of the driving of a vehicle on a roadway in association with taking a curve that makes improved safety when taking curves possible.

SUMMARY OF THE INVENTION

These and other purposes, which are made clear by the description below, are achieved by means of a method, a system, a motor vehicle, a computer program and a computer program product of the type described in the introduction, and that furthermore demonstrate the distinctive features specified in the characterising part of the attached independent patent claims. Preferred embodiments of the method and the system are defined in the attached non-independent claims.

According to the invention, these purposes are achieved with a method for the adaptation of the driving of a vehicle on a roadway in association with taking a curve, comprising the steps: to determine the degree of curvature along route of the vehicle; to adapt the speed of the vehicle based on the lateral acceleration of the vehicle; to determine a maximum permitted lateral acceleration; and to adapt the maximum permitted lateral acceleration based on properties of the vehicle and/or the surroundings that influence the safe driving of the vehicle when taking a curve, whereby the step of adapting the maximum permitted lateral acceleration includes the step of determining a factor that corresponds to the degree to which the said properties of the vehicle and/or the surroundings influence safe driving of the vehicle when taking the curve, whereby the said factor includes the influence of properties of the surroundings in the form of the effective width of the traffic lane in which the vehicle is being driven. The maximum permitted lateral acceleration is thus adapted based on the factor that has been determined. It is appropriate that the speed of the vehicle is adapted based on the adapted maximum permitted lateral acceleration. By determining and adapting in this way a maximum permitted lateral acceleration improved safety when taking a curve is made possible in that the speed of the vehicle is adapted to currently prevalent conditions with respect to such properties of the vehicle/surroundings.

It is preferable that the maximum permitted lateral acceleration is adapted depending on the effective width of the traffic lane, such that the maximum permitted lateral acceleration is set to a predetermined value at an effective width of the traffic lane within a certain interval of width. The predetermined value corresponds to a factor, appropriately a factor of 1. In the case of a relatively narrower effective width, one that falls below the said interval of width, it is appropriate that the maximum permitted lateral acceleration be reduced, according to one variant, depending on the narrowing. It is appropriate that the maximum permitted lateral acceleration be reduced by a factor that lies below 1 when the effective width of the traffic lane falls below the interval of width. According to one variant, in the case of a relatively broader effective width that exceeds the said interval of width, it is appropriate that the maximum permitted lateral acceleration be increased. It is appropriate that the maximum permitted acceleration is increased by a factor that exceeds 1 when the effective width of the traffic lane exceeds the interval of width. As a consequence, an efficient manner to adapt the maximum permitted lateral acceleration for the safe and efficient driving of a vehicle when taking a curve is in this way obtained.

According to one embodiment of the method, the said properties of the vehicle include at least one of the length of the vehicle, the width of the vehicle, the composition of the vehicle train, the centre of gravity of the vehicle, and the axle pressure of the vehicle. By considering in this way such properties of the vehicle, further improvement for effective adaptation of the maximum permitted lateral acceleration is made possible, in order to improve further safe and efficient driving of the vehicle when taking a curve.

According to one embodiment of the method, the said properties of the surroundings include at least one of the effective width of the traffic lane, the frictional properties of the roadway, visibility conditions, and camber properties of the roadway. By considering in this way such properties of the surroundings, further improvement for effective adaptation of the maximum permitted lateral acceleration is made possible, in order to improve further safe and efficient driving of the vehicle when taking a curve.

The embodiments of the system demonstrate corresponding advantages as corresponding embodiments of the method described above.

DESCRIPTION OF DRAWINGS

The present invention will be better understood with reference to the following detailed description read together with the attached drawings, where the same reference numbers refer to the same parts throughout the several views, and where:

Figure 1 illustrates schematically a motor vehicle according to one embodiment of the present invention;

Figure 2 illustrates schematically a system for the adaptation of the driving of a vehicle on a roadway in association with taking a curve according to one embodiment of the present invention;

Figure 3 illustrates schematically a roadway and a speed profile for the adaptation of the driving of a vehicle on a roadway in association with taking a curve according to one embodiment of the present invention;

Figure 3b illustrates schematically the adaptation of the maximum permitted lateral acceleration depending on a factor in the form of the effective width of the traffic lane in which vehicle is being driven;

Figure 4 illustrates schematically a block diagram of a method for the adaptation of the driving of a vehicle on a roadway in association with taking a curve according to one embodiment of the present invention; and

Figure 5 illustrates schematically a computer according to one embodiment of the present invention.

DESCRIPTION OF EMBODIMENTS

In this document, the term "link" refers to a communication link that may be a physical line, such as an opto-electronic communication line, or a non-physical line, such as a wireless connection, for example a radio link or microwave link.

In this document, the terms "effective width of the traffic lane" and "the effective width of the traffic lane in which the vehicle is being driven" refer to the actual space to manoeuvre for the vehicle. Thus, the effective width of the traffic lane in which the vehicle is being driven depends on the width of the vehicle itself.

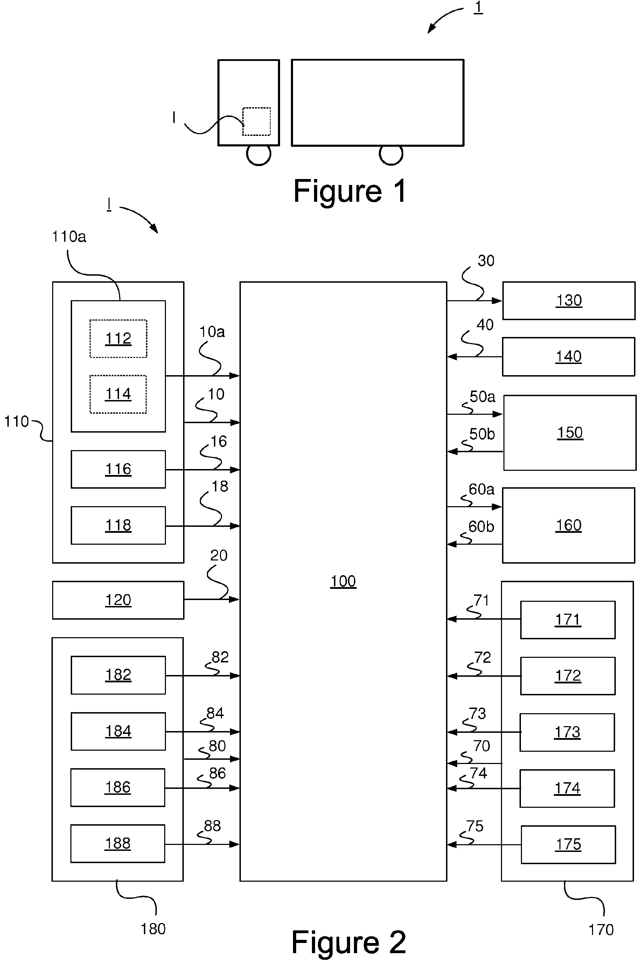

Figure 1 illustrates schematically a motor vehicle 1 according to one embodiment of the present invention. The vehicle 1 given as an example is constituted by a heavy vehicle in the form of a lorry. Alternatively, the vehicle may be constituted by any appropriate vehicle at all, such as a bus or a car. The vehicle includes a system I according to the present invention.

Figure 2 illustrates schematically a block diagram of a system I for the adaptation of the driving of a vehicle on a roadway in association with taking a curve according to one embodiment of the present invention.

The system I comprises an electronic control unit 100.

The system I comprises means 110 to determine the degree of curvature along the route of the vehicle.

The means 110 to determine the degree of curvature along the route of the vehicle includes, according to one variant, a map information unit 112 comprising map data including properties of the roadway along the route of the vehicle, including the said degree of curvature.

The means 110 to determine the degree of curvature along the route of the vehicle includes, according to one variant, means 114 to determine the position of the vehicle. The means 114 to determine the position of the vehicle comprises a geographical position-determination system to determine continuously the position of the vehicle along its route. An example of a geographical position-determination system is GPS.

The map information unit 112 and the means 114 to determine the position of the vehicle are comprised, according to one variant, of means 110a to determine the route of the vehicle, where the means to determine the route of the vehicle is arranged to provide predetermined properties of the roadway along the route of the vehicle. The said map data of the map-information unit 112 includes also properties of the roadway along the route of the vehicle, including topography.

Through the map-information unit 112 and the means 114 to determine the position of the vehicle, it is consequently made possible to identify continuously the position of the vehicle and properties of the roadway, including the degree of curvature.

The means 110 to determine the degree of curvature along the route of the vehicle includes, according to one variant, camera means 116 arranged to detect properties of the roadway, including the form of the extent of the roadway, including the curvature of the roadway and/or road markings in order in this way to determine the curvature of the roadway along which vehicle is travelling. The camera means may include one or several cameras for the detection.

The means 110 to determine the degree of curvature along the route of the vehicle includes, according to one variant, radar means 118 arranged to detect properties of and/or in association with the roadway including the detection of motion of objects in the form of vehicles in front and/or the detection of protective rails, roadside posts and/or other markings that protrude from the roadway or are arranged alongside the roadway.

The system I comprises means 120 to determine continuously the speed of the vehicle. The means 120 to determine continuously the speed of the vehicle includes, according to one variant, speed measurement means.

The system I comprises means 130 to adapt the speed of the vehicle, based on the lateral acceleration of the vehicle. The means 130 to adapt the speed of the vehicle based on the lateral acceleration of the vehicle includes means to cause the drive unit of the vehicle to increase the speed of the vehicle, where the drive unit of the vehicle may include a combustion engine whereby the engine is accelerated, and/or an electric motor, and means to decelerate the vehicle which includes activation of the brake means of the vehicle and/or coasting in order to achieve retardation.

The system I comprises means 140 to determine a maximum permitted lateral acceleration. The means 140 to determine a maximum permitted lateral acceleration comprises the determination of a predetermined maximum permitted lateral acceleration. The predetermined maximum permitted lateral acceleration is, according to one embodiment, of the magnitude of 2 m/s². The maximum permitted lateral acceleration is in this case constituted by a predetermined maximum permitted lateral acceleration. According to one alternative or supplementary variant, the electronic control unit 100 includes stored data of the maximum permitted lateral acceleration.

The system I comprises means 150 to determine a maximum permitted speed of the vehicle, based on the maximum permitted lateral acceleration. The term "speed of the vehicle" is here used to denote the longitudinal speed of the vehicle. The determination of the maximum speed of the vehicle based on the maximum permitted lateral acceleration uses information about the degree of curvature of the roadway along the route of the vehicle, whereby the following equation is used:

$$(1) \quad v_{Lmax}(s) = \sqrt{|a_{lat,max}(s)/c(s)|}$$

where $v_{Lmax}(s)$ is the maximum speed along the stretch s in front of the vehicle, $a_{lat,max}(s)$ is the maximum permitted lateral acceleration along the stretch s in front of vehicle, and $c(s)$ is the degree of curvature along the stretch s in front of the vehicle.

The degree of curvature is defined as 1/r, where r is the radius of curvature in metres. The maximum speed is determined according to Equation (1) above, which is derived through determining, according to Equation (2) below, the expected lateral acceleration $a_{lat}(s)$ and subsequently removing the speed of the vehicle from Equation (2) and inserting the maximum permitted lateral acceleration $a_{lat,max}(s)$.

The determination of the expected lateral acceleration uses the degree of curvature c that has been determined by means of the means 110 and the speed of the vehicle v to determine the degree of curvature. With the simplification that the speed vector of the vehicle lies along the direction of the tangent at the curve, the following equation is obtained from the law of centripetal force:

$$(2)\ a_{lat}(s) = {v_L(s)^2}\big/{r(s)} = c(s) * v_L(s)^2$$

The system comprises in this case means to determine an expected lateral acceleration.

The means 130 to adapt the speed of the vehicle based on the lateral acceleration of the vehicle comprises in this case means to adapt the speed of the vehicle based on the maximum permitted lateral acceleration.

The system comprises means 160 to adapt the maximum permitted lateral acceleration based on properties of the vehicle and/or the surroundings that influence the safe driving of the vehicle when taking a curve. Such properties of the vehicle may include the length of the vehicle, the width of the vehicle, the composition of the vehicle train, the distribution of load on the vehicle, the centre of gravity of the vehicle, and the axle pressure of the vehicle. Such properties of the surroundings may include the effective width of the traffic lane, frictional properties of the roadway, visibility conditions and camber properties.

The means 160 to adapt the maximum permitted lateral acceleration includes means to determine a factor that corresponds to the degree to which the said properties of the vehicle and/or the surroundings influence safe driving of the vehicle when taking a curve.

The said factor includes the influence of properties of the surroundings in the form of the effective width of the traffic lane in which the vehicle is being driven.

The system I comprises in this case means 170 to determine properties of the vehicle.

The means 170 to determine properties of the vehicle includes means 171 to determine the length of the vehicle. The means to determine the length of the vehicle may include information about the length of the vehicle already stored at the electronic control unit 100. The means to determine the length of the vehicle comprises, according to one variant, sensor means to determine the length of the vehicle, which sensor means, according to one variant, includes camera means or the equivalent.

The means 170 to determine properties of the vehicle includes means 172 to determine the width of the vehicle. The means to determine the width of the vehicle may include information about the width of the vehicle already stored at the electronic control unit 100. The means to determine the width of the vehicle comprises, according to one variant, sensor means to determine the width of the vehicle, which sensor means, according to one variant, includes camera means or the equivalent.

The means 170 to determine properties of the vehicle includes means 173 to determine the composition of the vehicle train. The composition of the vehicle train includes whether the vehicle is equipped with a trailer or similar. The means 173 to determine the composition of the vehicle train includes, according to one variant, sensor means such as camera means.

The means 170 to determine properties of the vehicle includes means 174 to determine the centre of gravity of the vehicle. The means 174 to determine the centre of gravity includes means to determine the position of the centre of gravity based on the physical properties of the vehicle including its weight, density, dimensions including width and height, and the design of the same.

The means 174 to determine centre of gravity includes means to determine the physical properties of the vehicle, which includes appropriate sensors such as weight sensors, camera means.

The means 170 to determine properties of the vehicle includes means 175 to determine the axle pressure of the vehicle. The means 175 to determine axle pressure of the vehicle includes pressure sensor means arranged, according to one variant, in association with axles of the vehicle for the determination of axle pressure.

The said properties of the surroundings include at least one of the effective width of the traffic lane, frictional properties of the roadway, visibility conditions and camber properties of the roadway. The said properties of the surroundings may include any appropriate properties of the surroundings that influence the driving of vehicle when taking a curve.

The system I comprises in this case means 180 to determine properties of the surroundings.

The means 180 to determine properties of the surroundings includes means 182 to determine the effective width of a traffic lane. The means 182 to determine the width of a traffic lane includes, according to one variant, map information that includes information about the width of traffic lanes along the route of the vehicle, and means to determine the position of the vehicle, according to one variant, the map information unit 112 and the means 114 to determine the position of the vehicle. The means to determine the width of a traffic lane includes, according to one variant, camera means.

The means 180 to determine properties of the surroundings includes means 184 to determine the frictional properties of the roadway. The means 184 to determine the frictional properties of a roadway includes means to determine differences in speed in the wheels during driving/braking, known as "slip". The means 184 to determine frictional properties of the roadway includes communication means to communicate information concerning relevant road conditions, where the communication may come from other vehicles. The means 184 to determine frictional properties of the roadway includes means to process meteorological data in order to determine frictional properties of the roadway.

The means 180 to determine properties of the surroundings includes means 186 to determine visibility conditions. Visibility conditions may include fog, precipitation such as rain and/or snow, darkness, spindrift or similar. The means to determine visibility conditions includes means to determine the current weather conditions and/or sensors to determine fog and/or precipitation.

The means 180 to determine properties of the surroundings includes means 188 to determine the camber properties of the roadway. The means 188 to determine the camber properties of the roadway includes, according to one variant, map information unit that includes information about the camber properties along the route of the vehicle, and means to determine the position of the vehicle, according to one variant, the map information unit 112 and the means 114 to determine the position of the vehicle. The means to determine the camber properties of the roadway includes, according to one variant, camera means.

The electronic control unit 100 is connected such that it exchanges signals with the means 110 to determine the degree of curvature along the route of the vehicle through a link 10. The electronic control unit 100 is arranged to receive over the link 10 a signal from the means 110 that represents degree of curvature data for the degree of curvature of the roadway along the route of the vehicle.

The electronic control unit 100 is connected such that it exchanges signals with the means 110a comprising the map information unit 112 and the means 114 to determine the position of the vehicle through a link 10a. The electronic control unit 100 is arranged to receive over the link 10a a signal from the means 110a that represents map data for the degree of curvature for the roadway along the route of the vehicle and positional data for the position of the degree of curvature relative to the vehicle.

The electronic control unit 100 is connected such that it exchanges signals with the camera means through a link 16. The electronic control unit 100 is arranged to receive over the link 16 a signal from the camera means 116 that represents degree of curvature data for the degree of curvature of the roadway along the route of the vehicle.

The electronic control unit 100 is connected such that it exchanges signals with the radar means 118 through a link 18. The electronic control unit 100 is arranged to receive over the link 18 a signal from the radar means 118 that represents degree of curvature data for the degree of curvature of the roadway along the route of the vehicle.

The electronic control unit 100 is connected such that it exchanges signals over a link 20 with the means 120 to determine continuously the speed of the vehicle. The electronic control unit 100 is arranged to receive over the link 20 a signal from the means 120 to determine continuously the speed of the vehicle representing speed data for the current speed of the vehicle.

The electronic control unit 100 is connected such that it exchanges signals over a link 30 with the means 130 to adapt the speed of the vehicle based on the lateral acceleration of the vehicle. The electronic control unit 100 is arranged to transmit a signal through the link 30 to the means 130 representing speed-adaptation data for the adaptation of the speed of the vehicle based on the lateral acceleration of the vehicle.

The electronic control unit 100 is connected such that it exchanges signals over a link 40 with the means 140 to determine a maximum permitted lateral acceleration. The electronic control unit 100 is arranged to receive over the link 40 a signal from the means 140 representing lateral acceleration data for the maximum permitted lateral acceleration.

The electronic control unit 100 is connected such that it exchanges signals over a link 50a with the means 150 to determine a maximum speed of the vehicle based on the maximum permitted lateral acceleration and the degree of curvature. The electronic control unit 100 is arranged to transmit a signal through the link 50a to the means 150 representing lateral acceleration data for the maximum permitted lateral acceleration and degree of curvature data for the curvature along the route of the vehicle.

The electronic control unit 100 is connected such that it exchanges signals over a link 50b with the means 150 to determine a maximum speed of the vehicle based on the maximum permitted lateral acceleration and the degree of curvature. The electronic control unit 100 is arranged to receive over the link 50b a signal from the means 150 representing speed data for the maximum speed of the vehicle that has been determined, taking the curvature and the maximum permitted lateral acceleration into consideration.

The electronic control unit 100 is connected such that it exchanges signals through a link 60a with the means 160 to adapt the maximum permitted lateral acceleration depending on the properties of the vehicle and/or the surroundings that influence the safe driving of the vehicle when taking a curve. The electronic control unit 100 is arranged to transmit through the link 60a a signal to the means 160 representing data for properties of the vehicle and/or the surroundings.

The electronic control unit 100 is connected such that it exchanges signals through a link 60b with the means 160 to adapt the maximum permitted lateral acceleration depending on the properties of the vehicle and/or of the surroundings that influence the safe driving of the vehicle when taking a curve. The electronic control unit 100 is arranged to receive over the link 60b a signal from the means 160 representing adaptation data for the adaptation of the maximum permitted lateral acceleration.

The electronic control unit 100 is connected such that it exchanges signals over a link 70 with the means 170 to determine properties of the vehicle. The electronic control unit 100 is arranged to receive over the link 70 a signal from the means 170 that represents data for properties of the vehicle.

The electronic control unit 100 is connected such that it exchanges signals over a link 71 with the means 171 to determine the length of the vehicle. The electronic control unit 100 is arranged to receive over the link 71 a signal from the means 171 that represents length data for the length of the vehicle.

The electronic control unit 100 is connected such that it exchanges signals over a link 72 with the means 172 to determine the width of the vehicle. The electronic control unit 100 is arranged to receive over the link 72 a signal from the means 172 that represents width data for the width of the vehicle.

The electronic control unit 100 is connected such that it exchanges signals over a link 73 with the means 173 to determine the composition of the train of the vehicle. The electronic control unit 100 is arranged to receive over the link 73 a signal from the means 173 that represents data for the composition of the train of the vehicle.

The electronic control unit 100 is connected such that it exchanges signals over a link 74 with the means 174 to determine the centre of gravity of the vehicle. The electronic control unit 100 is arranged to receive over the link 74 a signal from the means 174 that represents data for the centre of gravity of the vehicle.

The electronic control unit 100 is connected such that it exchanges signals over a link 75 with the means 175 to determine the axle pressure of the vehicle. The electronic control unit 100 is arranged to receive over the link 75 a signal from the means 175 that represents data for the centre of gravity of the vehicle.

The electronic control unit 100 is connected such that it exchanges signals over a link 80 with the means 180 to determine properties of the surroundings. The electronic control unit 100 is arranged to receive over the link 80 a signal from the means 180 that represents data for properties of the surroundings.

The electronic control unit 100 is connected such that it exchanges signals over a link 82 with the means 182 to determine the effective width of the traffic lane. The electronic control unit 100 is arranged to receive over the link 82 a signal from the means 182 that represents traffic lane width data for the width of the traffic lane along the route of the vehicle.

The electronic control unit 100 is connected such that it exchanges signals over a link 84 with the means 184 to determine frictional properties of the roadway. The electronic control unit 100 is arranged to receive over the link 84 a signal from the means 184 that represents friction data for the frictional properties of the roadway along the route of the vehicle.

The electronic control unit 100 is connected such that it exchanges signals over a link 86 with the means 186 to determine visibility conditions. The electronic control unit 100 is arranged to receive over the link 86 a signal from the means 186 that represents visibility data for visibility conditions along the route of the vehicle.

The electronic control unit 100 is connected such that it exchanges signals over a link 88 with the means 188 to determine camber properties of the roadway. The electronic control unit 100 is arranged to receive over the link 88 a signal from the means 188 that represents camber data for the camber properties of the roadway along the route of the vehicle.

The electronic control unit 100 is arranged to process the said degree of curvature data, lateral acceleration data, and data for properties of the vehicle and/or the surroundings in order to determine an adapted maximum permitted lateral acceleration.

The means 160 to adapt the maximum permitted lateral acceleration depending on the properties of the vehicle and/or the surroundings that influence the safe driving of the vehicle is arranged to determine, based on data for the properties of the vehicle and/or surroundings, adaptation data for the adaptation of the maximum permitted lateral acceleration and to transmit them to the electronic control unit 100.

The electronic control unit 100 is arranged to process the said adaptation data and in this way to determine an adapted maximum permitted lateral acceleration.

The means 150 to determine the maximum speed of the vehicle based on the maximum permitted lateral acceleration and the degree of curvature is arranged to process the said adaptation data in order to determine the maximum permitted speed of the vehicle and to transmit speed data that represents the maximum speed of the vehicle along the route, taking the degree of curvature and the maximum permitted lateral acceleration into consideration.

The electronic control unit 100 is arranged to process the said speed data and to transmit a signal to the means 130 to adapt the speed of the vehicle representing speed adaptation data for the adaptation of the speed of the vehicle in accordance with the maximum permitted speed of the vehicle determined in this way, such that the vehicle is driven safely and efficiently, taking into consideration the properties of the vehicle and the surroundings.

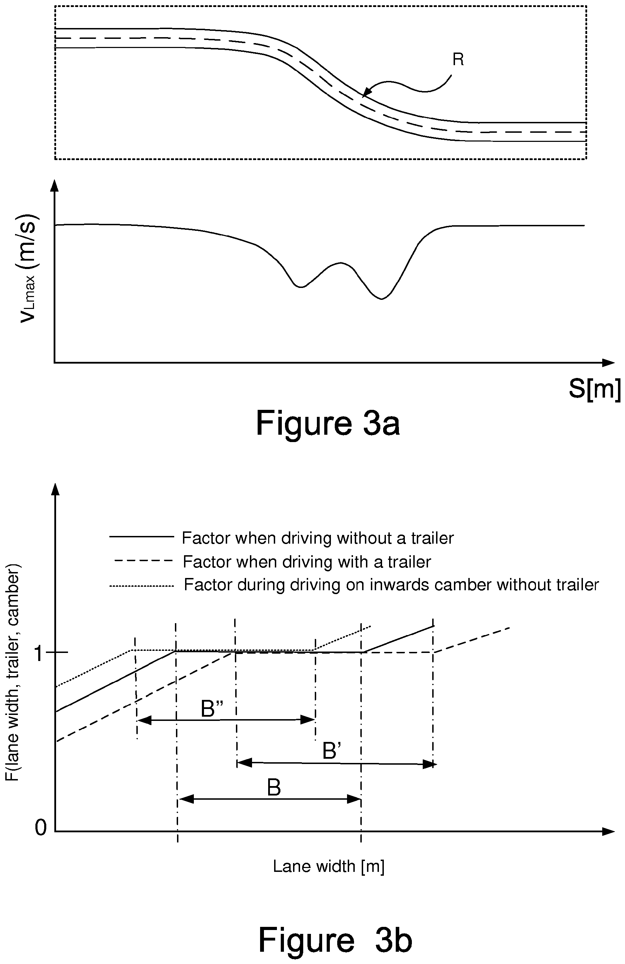

Figure 3a illustrates schematically a roadway R and a speed profile for the adaptation of the driving of a vehicle on the roadway in association with taking a curve produced according to Equation (1) described in association with Figure 2, according to one embodiment of the present invention. The curve according to this example constitutes an S-curve, whereby it is made clear by Figure 3a that the maximum speed $v_{Lmax}(s)$ is reduced during the relevant curve based on the maximum permitted lateral acceleration, i.e. the speed must be reduced from the stipulated speed to a lower speed when taking the curves given as examples, in order not to exceed the maximum permitted lateral acceleration.

Figure 3b illustrates schematically the adaptation of the maximum permitted lateral acceleration based on a factor related to the effective width of the traffic lane in which vehicle is being driven.

It is possible in this way that the maximum permitted lateral acceleration be adapted depending on the effective width of the traffic lane.

According to the example in Figure 3b, for a vehicle without a trailer, here illustrated with a continuous line, the maximum permitted lateral acceleration is adapted such that, at an effective width of the traffic lane within a certain interval of width B, the maximum permitted lateral acceleration is set to a predetermined value corresponding to a factor of 1.

When the effective width of the traffic lane falls below the interval of width, i.e. when it lies below the lower limit of the interval of width B, the maximum permitted lateral acceleration is reduced by a factor that lies below 1. According to this variant, the maximum permitted lateral acceleration is reduced linearly with the degree of narrowing.

When the effective width of the traffic lane lies above the interval of width, i.e. when it exceeds the upper limit of the interval of width B, the maximum permitted lateral acceleration is increased, according to one variant, by a factor that exceeds 1. According to this variant, the maximum permitted lateral acceleration is increased linearly with the degree of increase in width.

The said factor may include also the influence of properties of the vehicle in the form of the composition of the vehicle train, for example vehicles equipped with trailers.

According to the example shown in Figure 3b the interval of width B' is, for a vehicle with a trailer, illustrated here with a dashed line, displaced with a broader most narrow width and a broader maximum width, compared to the case with no trailer. Accordingly, the maximum permitted lateral acceleration is adapted such that, at an effective width of the traffic lane within the interval of width B', the maximum permitted lateral acceleration is set to a predetermined value corresponding to a factor of 1.

When the effective width of the traffic lane falls below the interval of width B', i.e. when it lies below the lower limit of the interval of width B', the maximum permitted lateral acceleration is reduced by a factor that lies below 1. According to this variant, the maximum permitted lateral acceleration is reduced linearly with the degree of narrowing. The factor with respect to the case with a trailer thus leads to a larger reduction of the maximum permitted lateral acceleration, and the reduction takes place at a broader width than for the case without a trailer.

When the effective width of the traffic lane lies above the interval of width B', i.e. exceeds the broadest width in the interval of width B', the maximum permitted lateral acceleration is increased, according to one variant, by a factor that exceeds 1. According to this variant, the maximum permitted lateral acceleration is increased linearly with the degree of increase in width. The factor with respect to the case with a trailer thus leads to a smaller reduction of the maximum permitted lateral acceleration, and the increase takes place at a broader width than for the case without a trailer.

The speed of the vehicle is in this case limited, when taking a curve with a vehicle with a trailer, such that vehicle is allowed to be driven with lower speed than without trailer.

The said factor may include also the influence of properties of the surroundings in the form of the camber properties of the traffic lane in which the vehicle is being driven.

According to example in Figure 3b the interval of width B" is, for a vehicle that is driving on an inwards camber without a trailer, here illustrated with a dotted line, displaced with a narrower minimum width and a narrower broadest width compared to the case without camber. Accordingly, the maximum permitted lateral acceleration is adapted such that, at an effective width of the traffic lane within the interval of width B", the maximum permitted lateral acceleration is set to a predetermined value corresponding to a factor of 1.

When the effective width of the traffic lane falls below the interval of width B", i.e. when it lies below the lower limit of the interval of width B", the maximum permitted lateral acceleration is reduced by a factor that lies below 1. According to this variant, the maximum permitted lateral acceleration is reduced linearly with the degree of narrowing. The factor relating to the case of driving on an inwards camber without a trailer thus leads to a smaller reduction of the maximum permitted lateral acceleration, and the reduction takes place at a narrower width than for the case without a trailer.

When the effective width of the traffic lane lies above the interval of width B", i.e. exceeds the broadest width in the interval of width B", the maximum permitted lateral acceleration is increased, according to one variant, by a factor that exceeds 1. According to this variant, the maximum permitted lateral acceleration is increased linearly with the degree of increase in width. The factor relating to the case of driving on an inwards camber without a trailer thus leads to a larger increase in the maximum permitted lateral acceleration, and the increase takes place at a narrower width than for the case without a trailer.

Thus the vehicle taking a curve on an inwards camber is consequently permitted to be driven at a higher speed.

The said factor, which corresponds to the degree to which the said properties of the vehicle and/or the surroundings influence safe driving of the vehicle when taking the curve, can thus lead to the maximum permitted lateral acceleration, and in this way the permitted speed, being adapted to a lower value or a higher value, depending on the factor. The factor can therefore be seen as a punishment factor or a reward factor that influences the maximum permitted lateral acceleration.

The said factor can include also the influence of other properties of the vehicle and/or surroundings described in this document.

The maximum permitted lateral acceleration can be determined also based on one or several of the properties of the vehicle and/or surroundings described below, without the said factor, by treating such properties in an appropriate manner and/or having predetermined maximum permitted lateral accelerations that depend on determined properties in order to obtain a suitable adapted maximum permitted lateral acceleration.

The maximum permitted lateral acceleration can be determined also based on one or several of the properties of the vehicle and/or surroundings described below, by treating and/or having predetermined maximum permitted lateral accelerations that depend on determined properties or determined by means of the factor as described above, where the lowest value of lateral acceleration is used as the maximum permitted lateral acceleration.

Properties of the surroundings in the form of frictional properties of the roadway are, for example, used. A certain frictional property $\mu$ in this case corresponds to a predetermined lateral acceleration $a_{lat,\mu}$. Furthermore, a lateral acceleration is determined based on a factor and the predetermined maximum permitted lateral acceleration $a_{lat,max}$, where the factor includes the effective width of the traffic lane and, where relevant, also consideration of any trailer and camber that may be present. The lowest value of the lateral acceleration that corresponds to the frictional properties of the roadway and the lateral acceleration determined based on the factor and the predetermined maximum permitted lateral acceleration $a_{lat,max}$ are thus selected as maximum permitted lateral acceleration. Such an equation can have the following appearance:

$$a_{lat} = \min\left(a_{lat,\mu}, a_{lat,max} \times \Gamma(bredd, släp, dosering)\right)$$

The said properties of the vehicle include at least one of the length of the vehicle, the width of the vehicle, the composition of the vehicle train, the centre of gravity of the vehicle, and the axle pressure of the vehicle. The said properties of the vehicle may include any appropriate properties of the vehicle that influence the driving of vehicle when taking a curve.

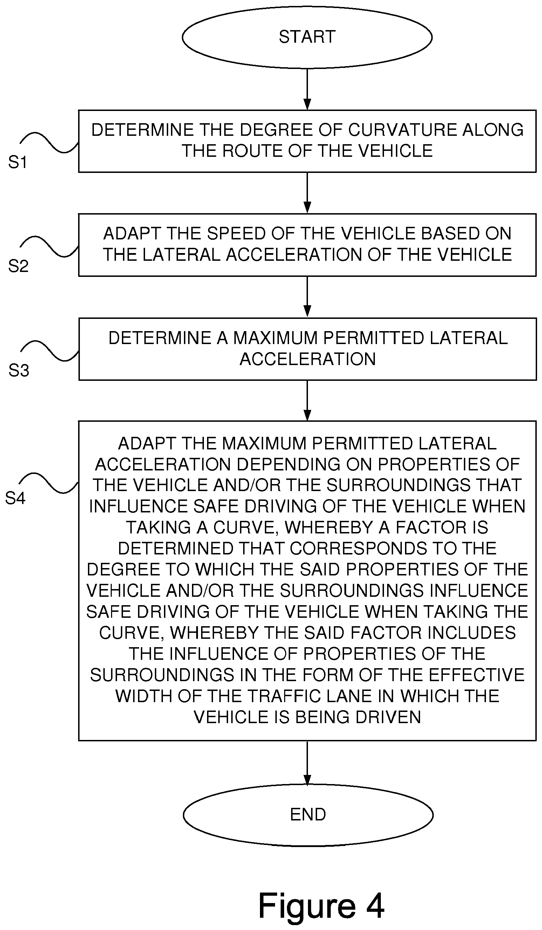

Figure 4 illustrates schematically a block diagram of a method for the adaptation of the driving of a vehicle on a roadway in association with taking a curve according to one embodiment of the present invention.

According to one embodiment, the adaptation of the driving of a vehicle on a roadway in association with taking a curve comprises a first step S1. The degree of curvature along the route of the vehicle is determined in this step.

The method comprises further a second step S2. The speed of the vehicle based on the acceleration of the vehicle is adapted in this step.

The method comprises further a third step S3. The maximum permitted lateral acceleration is determined in this step.

The method comprises further a fourth step S4. The maximum permitted lateral acceleration is adapted in this step depending on properties of the vehicle and/or the surroundings that influence the safe driving of the vehicle when taking a curve.

Step S4 of adapting the maximum permitted lateral acceleration includes the further step of determining a factor that corresponds to the degree to which the said properties of the vehicle and/or the surroundings influence safe driving of the vehicle when taking the curve, whereby the said factor includes the influence of properties of the surroundings in the form of the effective width of the traffic lane in which the vehicle is being driven.

According to one embodiment, the said factor is set to a predetermined value for an effective width of the traffic lane within a certain interval of width; whereby the said factor and consequently the maximum permitted lateral acceleration are reduced if the effective width lies below the interval of width, and whereby said factor and consequently the maximum permitted lateral acceleration are increased if the effective width lies above the interval of width.

According to one embodiment, the said properties of the vehicle include at least one of the length of the vehicle, the width of the vehicle, the composition of the vehicle train, the centre of gravity of the vehicle, and the axle pressure of the vehicle.

According to one embodiment, the said properties of the surroundings include at least one of the effective width of the traffic lane, the frictional properties of the roadway, visibility conditions, and camber properties of the roadway.

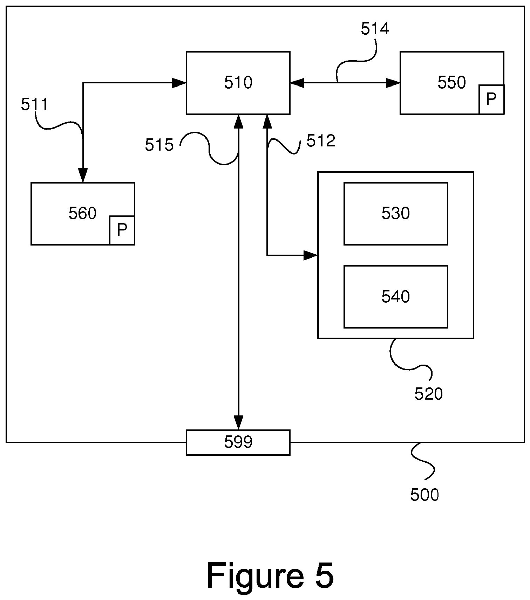

With reference to Figure 5, there is shown a drawing of a design of an arrangement 500. The control unit 100 that has been described with reference to Figure 2 can comprise in one execution the arrangement 500. The arrangement 500 comprises a non-transient memory 520, a data processing unit 510 and a read/write memory 550. The non-transient memory 520 has a first section of memory 530 in which a computer program, such as an operating system, is stored in order to control the function of the arrangement 500. Furthermore, the arrangement 500 comprises a bus controller, a serial communication port, I/O means, an A/D converter, a unit for the input and transfer of time and date, an event counter and an interrupt controller (not shown in the drawing). The non-transient memory 520 has also a second section of memory 540.

IA computer program P is provided that comprises routines for the adaptation of the driving of a vehicle on a roadway in association with taking a curve according to the innovative method. The program P comprises routines to determine the degree of curvature along the route of the vehicle. The program P comprises routines to adapt the speed of the vehicle, based on the lateral acceleration of the vehicle. The program P comprises routines to determine a maximum permitted lateral acceleration. The program P comprises routines to adapt the maximum permitted lateral acceleration depending on properties of the vehicle and/or the surroundings that influence the safe driving of the vehicle when taking a curve. The program P comprises routines to determine a factor that corresponds to the degree to which the said properties of the vehicle and/or the surroundings influence safe driving of the vehicle when taking the curve, whereby the said factor includes the influence of properties of the surroundings in the form of the effective width of the traffic lane in which the vehicle is being driven. The program P may be stored in an executable form or in a compressed form in a memory 560 and/or a read/write memory 550.

When it is described that the data processing unit 510 carries out a certain function, it is to be understood that the data processing unit 510 carries out a certain part of the program that is stored in the memory 560, or a certain part of the program that is stored in the read/write memory 550.

The data processing arrangement 510 can communicate with a data port 599 through a data bus 515. The non-transient memory 520 is intended for communication with the data processing unit 510 through a data bus 512. The separate memory 560 is intended to communicate with the data processing unit 510 through a data bus 511. The read/write memory 550 is arranged to communicate with the data processing unit 510 through a data bus 514. Links associated with the control unit 100, for example, may be connected to the data port 599.

When data is received at the data port 599 it is temporarily stored in the second section of memory 540. When the data that has been received has been temporarily stored, the data processing unit 510 is prepared for the execution of code in a manner that has been described above. The signals received on the data port 599 can be used by the arrangement 500 to determine the curvature along the route of the vehicle. The signals received on the data port 599 can be used by the arrangement 500 to adapt the speed of the vehicle based on the lateral acceleration of the vehicle. The signals received on the data port 599 can be used by the arrangement 500 to determine a maximum permitted lateral acceleration. The signals received on the data port 599 can be used by the arrangement 500 to adapt the maximum permitted lateral acceleration depending on properties of the vehicle and/or the surroundings that influence the safe driving of the vehicle when taking a curve. The signals received on the data port 599 can be used by the arrangement 500 to determine a factor that corresponds to the degree to which the said properties of the vehicle and/or the surroundings influence safe driving of the vehicle when taking the curve, whereby the said factor includes the influence of properties of the surroundings in the form of the effective width of the traffic lane in which the vehicle is being driven.

Parts of the methods described here may be carried out by the arrangement 500 with the aid of the data processing unit 510, which runs the program stored in the memory 560 or in the read/write memory 550. When the arrangement 500 runs the program, the method described here is executed.

The description above of the preferred embodiments of the present invention has been given for the purposes of illustration and description. It is not intended to be exhaustive or to limit the invention to the variants that have been described. Many modifications and variations will be obvious for one skilled in the arts. The embodiments have been selected and described in order to best describe the principles of the invention and its practical applications, and thus to make it possible for one skilled in the arts to understand the invention for various embodiments and with the various modifications that are appropriate for the intended use.

**Claims**

1. A method for the adaptation of the driving of a vehicle on a roadway in association with taking a curve, comprising the steps: to determine (S1) the degree of curvature along the route of the vehicle; to adapt (S2) the speed of the vehicle based on the lateral acceleration of the vehicle, to determine (S3) a maximum permitted lateral acceleration; and to adapt (S4) the maximum permitted lateral acceleration depending on properties of the vehicle and/or the surroundings that influence the safe driving of the vehicle when taking a curve, whereby the step to adapt the maximum permitted lateral acceleration includes the step to determine a factor that corresponds to the degree to which the said properties of the vehicle and/or the surroundings influence safe driving of the vehicle when taking a curve, **characterized in that** the said factor includes the influence of properties of the surroundings in the form of the effective width of the traffic lane in which the vehicle is being driven.

2. The method according to claim 1, whereby the said factor is set to a predetermined value for an effective width of the traffic lane within a certain interval of width (B); whereby the said factor and consequently the maximum permitted lateral acceleration are reduced if the effective width lies below the interval of width (B), and whereby said the factor and consequently the maximum permitted lateral acceleration are increased if the effective width lies above the interval of width (B).

3. The method according to any one of claims 1-2, whereby the said properties of the vehicle include at least one of the length of the vehicle, the width of the vehicle, the composition of the vehicle train, the centre of gravity of the vehicle, and the axle pressure of the vehicle.

4. The method according to any one of claims 1-3, whereby the said properties of the surroundings include at least one of the effective width of the traffic lane, frictional properties of the roadway, visibility conditions and camber properties of the roadway.

5. A system (I) for the adaptation of the driving of a vehicle (1) on a roadway (R) in association with taking a curve, comprising means (110) to determine the degree of curvature along the route of the vehicle; means (130) to adapt the speed of the vehicle based on the lateral acceleration of the vehicle, means (140) to determine a maximum permitted lateral acceleration; and means (160) to adapt the maximum permitted lateral acceleration depending on properties of the vehicle and/or the surroundings that influence the safe driving of the vehicle when taking a curve, whereby the means (160) to adapt the maximum permitted lateral acceleration including means to determine a factor that corresponds to the degree to which the said properties of the vehicle and/or the surroundings influence safe driving of the vehicle when taking a curve, **characterized in that** the said factor includes the influence of properties of the surroundings in the form of the effective width of the traffic lane in which the vehicle is being driven.

6. The system according to claim 5, whereby the said properties of the vehicle include at least one of the length of the vehicle, the width of the vehicle, the composition of the vehicle train, the centre of gravity of the vehicle, and the axle pressure of the vehicle.

7. The system according to any one of claims 5-6, whereby the said properties of the surroundings include at least one of the effective width of the traffic lane, frictional properties of the roadway, visibility conditions and camber properties of the roadway.

8. A vehicle comprising a system (I) according to any one of claims 5-7.

9. A computer program (P) for the adaptation of the driving of a vehicle on a roadway in association with taking a curve, where the said computer program (P) comprises program code that, when it is run by an electronic control unit (100) or by another computer (500) connected to the electronic control unit (100), causes the electronic control unit (100) to carry out the steps according to claims 1-4.

10. A computer program product comprising a digital storage medium that stores the computer program according to claim 9.

**Patentansprüche**

1. Verfahren zur Anpassung des Fahrens eines Fahrzeugs auf einer Fahrbahn in Verbindung mit einem Durchfahren einer Kurve, umfassend die Schritte: Bestimmen (S1) des Grades der Krümmung entlang der Strecke des Fahrzeugs; Anpassen (S2) der Geschwindigkeit des Fahrzeugs basierend auf der Querbeschleunigung des Fahrzeugs, Bestimmen (S3) einer maximal zulässigen Querbeschleunigung; und Anpassen (S4) der maximal zulässigen Querbeschleunigung in Abhängigkeit von Eigenschaften des Fahrzeugs und/oder der Umgebung, die das sichere Fahren des Fahrzeugs beim Durchfahren einer Kurve beeinflussen, wobei der Schritt zum Anpassen der maximal zulässigen Querbeschleunigung den Schritt zum Bestimmen eines Faktors umfasst, der dem Grad entspricht, in dem die Eigenschaften des Fahrzeugs und/oder der Umgebung ein sicheres Fahren des Fahrzeugs beim Durchfahren einer Kurve beeinflussen, **dadurch gekennzeichnet, dass** der Faktor den Einfluss von Eigenschaften der Umgebung in Form der effektiven Breite der Verkehrsspur, auf der das Fahrzeug gefahren wird, umfasst.

2. Verfahren nach Anspruch 1, wobei der Faktor auf einen vorbestimmten Wert für eine effektive Breite der Verkehrsspur innerhalb eines bestimmten Breitenintervalls (B) eingestellt wird; wobei der Faktor und folglich die maximal zulässige Querbeschleunigung verringert werden, wenn die effektive Breite unterhalb des Breitenintervalls (B) liegt, und wobei der Faktor und folglich die maximal zulässige Querbeschleunigung erhöht werden, wenn die effektive Breite oberhalb des Breitenintervalls (B) liegt.

3. Verfahren nach einem der Ansprüche 1-2, wobei die Eigenschaften des Fahrzeugs mindestens eine der folgenden Eigenschaften umfassen: die Länge des Fahrzeugs, die Breite des Fahrzeugs, die Zusammensetzung des Fahrzeugzugs, den Schwerpunkt des Fahrzeugs und den Achsdruck des Fahrzeugs.

4. Verfahren nach einem der Ansprüche 1-3, wobei die Eigenschaften der Umgebung mindestens eine der folgenden Eigenschaften umfassen: die effektive Breite der Verkehrsspur, Reibungseigenschaften der Fahrbahn, Sichtverhältnisse und Sturzeigenschaften der Fahrbahn.

5. System (I) zur Anpassung des Fahrens eines Fahrzeugs (1) auf einer Fahrbahn (R) in Verbindung mit einem Durchfahren einer Kurve, umfassend Mittel (110) zum Bestimmen des Grades der Krümmung entlang der Strecke des Fahrzeugs; Mittel (130) zum Anpassen der Geschwindigkeit des Fahrzeugs basierend auf der Querbeschleunigung des Fahrzeugs, Mittel (140) zum Bestimmen einer maximal zulässigen Querbeschleunigung; und Mittel (160) zum Anpassen der maximal zulässigen Querbeschleunigung in Abhängigkeit von Eigenschaften des Fahrzeugs und/oder der Umgebung, die das sichere Fahren des Fahrzeugs beim Durchfahren einer Kurve beeinflussen, wobei die Mittel (160) zum Anpassen der maximal zulässigen Querbeschleunigung Mittel zum Bestimmen eines Faktors umfassen, der dem Grad entspricht, in dem die Eigenschaften des Fahrzeugs und/oder der Umgebung ein sicheres Fahren des Fahrzeugs beim Durchfahren einer Kurve beeinflussen, **dadurch gekennzeichnet, dass** der Faktor den Einfluss von Eigenschaften der Umgebung in Form der effektiven Breite der Verkehrsspur, auf der das Fahrzeug gefahren wird, umfasst.

6. System nach Anspruch 5, wobei die Eigenschaften des Fahrzeugs mindestens eine der folgenden Eigenschaften umfassen: die Länge des Fahrzeugs, die Breite des Fahrzeugs, die Zusammensetzung des Fahrzeugzugs, den Schwerpunkt des Fahrzeugs und den Achsdruck des Fahrzeugs.

7. System nach einem der Ansprüche 5-6, wobei die Eigenschaften der Umgebung mindestens eine der folgenden Eigenschaften umfassen: die effektive Breite der Verkehrsspur, Reibungseigenschaften der Fahrbahn, Sichtverhältnisse und Sturzeigenschaften der Fahrbahn.

8. Fahrzeug mit einem System (I) nach einem der Ansprüche 5-7.

9. Computerprogramm (P) zur Anpassung des Fahrens eines Fahrzeugs auf einer Fahrbahn in Verbindung mit einem Durchfahren einer Kurve, wobei das Computerprogramm (P) einen Programmcode umfasst, der, wenn er von einer elektronischen Steuereinheit (100) oder einem anderen, mit der elektronischen Steuereinheit (100) verbundenen Computer (500) ausgeführt wird, die elektronische Steuereinheit (100) veranlasst, die Schritte nach den Ansprüchen 1-4 auszuführen.

10. Computerprogrammprodukt mit einem digitalen Speichermedium, das das Computerprogramm nach Anspruch 9 speichert.

**Revendications**

1. Procédé d'adaptation de la conduite d'un véhicule sur une chaussée en association avec la prise d'une courbe, comprenant les étapes : déterminer (S1) le degré de courbure le long de la route du véhicule ; adapter (S2) la vitesse du véhicule sur la base de l'accélération latérale du véhicule, déterminer (S3) une accélération latérale maximale autorisée ; et adapter (S4) l'accélération latérale maximale autorisée en fonction des propriétés du véhicule et/ou de l'environnement qui influencent la conduite sécurisée du véhicule lors de la prise d'une courbe, moyennant quoi l'étape d'adaptation de l'accélération latérale maximale autorisée comporte l'étape consistant à déterminer un facteur qui correspond au degré auquel lesdites propriétés du véhicule et/ou de l'environnement influencent la conduite sécurisée du véhicule lors de la prise d'une courbe, **caractérisé en ce que** ledit facteur comporte l'influence des propriétés de l'environnement sous la forme de la largeur effective de la voie de circulation dans laquelle le véhicule est conduit.

2. Procédé selon la revendication 1, dans lequel ledit facteur est fixé à une valeur prédéterminée pour une largeur effective de la voie de circulation dans un certain intervalle de largeur (B) ; moyennant quoi ledit facteur et par conséquent l'accélération latérale maximale autorisée sont réduits si la largeur effective se situe en dessous de l'intervalle de largeur (B), et moyennant quoi ledit facteur et par conséquent l'accélération latérale maximale autorisée sont augmentés si la largeur effective se situe au-dessus de l'intervalle de largeur (B).

3. Procédé selon l'une quelconque des revendications 1 et 2, moyennant quoi lesdites propriétés du véhicule comportent au moins l'une parmi la longueur du véhicule, la largeur du véhicule, la composition du train de véhicules, le centre de gravité du véhicule et la pression d'essieu du véhicule.

4. Procédé selon l'une quelconque des revendications 1 à 3, moyennant quoi lesdites propriétés de l'environnement comportent au moins l'une parmi la largeur effective de la voie de circulation, les propriétés de frottement de la chaussée, les conditions de visibilité et les propriétés de carrossage de la chaussée.

5. Système (1) d'adaptation de la conduite d'un véhicule (1) sur une chaussée (R) en association avec la prise d'une courbe, comprenant un moyen (110) pour déterminer le degré de courbure le long de la route du véhicule ; un moyen (130) adapter la vitesse du véhicule sur la base de l'accélération latérale du véhicule, un moyen (140) pour déterminer une accélération latérale maximale autorisée ; et un moyen (160) pour adapter l'accélération latérale maximale autorisée en fonction des propriétés du véhicule et/ou de l'environnement qui influencent la conduite sécurisée du véhicule lors de la prise d'une courbe, moyennant quoi le moyen (160) d'adaptation de l'accélération latérale maximale autorisée comportant un moyen pour déterminer un facteur qui correspond au degré auquel lesdites propriétés du véhicule et/ou de l'environnement influencent la conduite sécurisée du véhicule lors de la prise d'une courbe, **caractérisé en ce que** ledit facteur comporte l'influence des propriétés de l'environnement sous la forme de la largeur effective de la voie de circulation dans laquelle le véhicule est conduit.

6. Système selon la revendication 5, moyennant quoi lesdites propriétés du véhicule comportent au moins l'une parmi la longueur du véhicule, la largeur du véhicule, la composition du train de véhicules, le centre de gravité du véhicule et la pression d'essieu du véhicule.

7. Système selon l'une quelconque des revendications 5 et 6, moyennant quoi lesdites propriétés de l'environnement comportent au moins l'une parmi la largeur effective de la voie de circulation, les propriétés de frottement de la chaussée, les conditions de visibilité et les propriétés de carrossage de la chaussée.

8. Véhicule comprenant un système (1) selon l'une quelconque des revendications 5 à 7.

9. Programme informatique (P) d'adaptation de la conduite d'un véhicule sur une chaussée en association avec la prise d'une courbe, où ledit programme informatique (P) comprend un code de programme qui, lorsqu'il est exécuté par une unité de commande électronique (100) ou par un autre ordinateur (500) connecté à l'unité de commande électronique (100), amène la réalisation par l'unité de commande électronique (100) des étapes selon les revendications 1 à 4.

10. Produit de programme informatique comprenant un support de stockage numérique qui stocke le programme informatique selon la revendication 9.

Figure 1

Figure 2

Figure 3a

- Factor when driving without a trailer
- - - Factor when driving with a trailer
........... Factor during driving on inwards camber without trailer

Figure 3b

START

S1 — DETERMINE THE DEGREE OF CURVATURE ALONG THE ROUTE OF THE VEHICLE

S2 — ADAPT THE SPEED OF THE VEHICLE BASED ON THE LATERAL ACCELERATION OF THE VEHICLE

S3 — DETERMINE A MAXIMUM PERMITTED LATERAL ACCELERATION

S4 — ADAPT THE MAXIMUM PERMITTED LATERAL ACCELERATION DEPENDING ON PROPERTIES OF THE VEHICLE AND/OR THE SURROUNDINGS THAT INFLUENCE SAFE DRIVING OF THE VEHICLE WHEN TAKING A CURVE, WHEREBY A FACTOR IS DETERMINED THAT CORRESPONDS TO THE DEGREE TO WHICH THE SAID PROPERTIES OF THE VEHICLE AND/OR THE SURROUNDINGS INFLUENCE SAFE DRIVING OF THE VEHICLE WHEN TAKING THE CURVE, WHEREBY THE SAID FACTOR INCLUDES THE INFLUENCE OF PROPERTIES OF THE SURROUNDINGS IN THE FORM OF THE EFFECTIVE WIDTH OF THE TRAFFIC LANE IN WHICH THE VEHICLE IS BEING DRIVEN

END

# Figure 4

Figure 5

**EP 3 145 780 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010023232 A
- US 20130289874 A
- DE 102011080761
- EP 2537727 A1